# EUROPEAN PATENT APPLICATION

(11) **EP 4 840 302 A1**
(43) Date of publication of application: **18.11.2026**
(21) Application number: 25212965.5
(22) Date of filing: 03.11.2025
(51) Int. Cl.: A01K 15/02

(54) **PET INTERACTION DEVICE AND METHOD THEREOF**

(30) Priority: 15.05.2025 TW 114118238
(71) Applicant: Tomofun Co., Ltd., Taipei City 10542 (TW)
(72) Inventor: Chang, Yu-Chen, 10542 Taipei City (TW); Chang, Chia-Yen, 10542 Taipei City (TW); Chen, Min-Wei, 10542 Taipei City (TW); Chang, Hsun-Kai, 10542 Taipei City (TW); Shih, Fong-Chi, 10542 Taipei City (TW)
(74) Representative: Gleiss Große Schrell und Partner mbB

(57) **Abstract**

A pet interaction device (10), comprising: a housing (101); a transport channel (140) disposed within the housing (101), the transport channel (140) including a storage subchannel (141) and an ejection subchannel (142) connected to each other, the storage subchannel (141) configured to store feed (30), and the ejection subchannel (142) provided with a channel outlet (144), through which the feed (30) exits the smart pet interaction device (10); a valve unit (150), disposed at a junction connecting the storage subchannel (141) and the ejection subchannel (142), configured to control whether the storage subchannel (141) and the ejection subchannel (142) are in communication; a sensing unit (160), disposed within the ejection subchannel, configured to detect whether the feed passes through the ejection subchannel (142); and a processing unit (130), disposed within the housing (101) and electrically connected to the valve unit (150) and the sensing unit (160); wherein, in response to an ejection signal received by the processing unit (130), the processing unit (130) controls the valve unit (150) to enter an ejection state, causing the storage subchannel (141) to communicate with the ejection subchannel (142), and the valve unit (150) propels the feed (30) toward the channel outlet (144) along the ejection subchannel (142).

## Description

### BACKGROUND

### Technical Field

The present disclosure relates to a smart pet interaction device, more particularly, to a smart pet interaction device intended to resolve pet food blockages and minimize the overall device size.

### Description of the Related Art

Conventional pet interaction devices store items such as pet food or pet toys in a holding chamber. These devices operate in response to user inputs or sensor signals by employing motion-guiding mechanisms to push or toss pet food or pet toys. However, conventional pet interaction devices generally lack the capability to detect obstructions of pet food or pet toys in the passage, and are unable to autonomously resolve such issues based on detecting results, thereby causing inconvenience to the user.

In view of the above, a smart pet interaction device comprising a sensing unit and a valve unit is proposed to address the aforementioned technical issues. This device enhances user experience and improves usability while achieving the objectives of effectively reducing the number of components employed, lowering manufacturing costs, and minimizing the overall device size.

### SUMMARY

One aspect of the present disclosure provides a smart pet interaction device, comprising: a housing; a transport channel disposed within the housing, the transport channel including a storage subchannel and an ejection subchannel connected to each other, the storage subchannel configured to store feed, and the ejection subchannel provided with a channel outlet, through which the feed exits the smart pet interaction device; a valve unit, disposed at a junction connecting the storage subchannel and the ejection subchannel, configured to control whether the storage subchannel and the ejection subchannel are in communication; a sensing unit, disposed within the ejection subchannel, configured to detect whether the feed passes through the ejection subchannel; and a processing unit, disposed within the housing and electrically connected to the valve unit and the sensing unit; wherein, in response to an ejection signal received by the processing unit, the processing unit controls the valve unit to enter an ejection state, causing the storage subchannel to communicate with the ejection subchannel, and the valve unit propels the feed toward the channel outlet along the ejection subchannel.

Another aspect of the present disclosure provides a smart pet interaction method, comprising: receiving an ejection signal by a processing unit; controlling a valve unit to enter a ejection state to enable communication between a storage subchannel and an ejection subchannel, and propelling feed forward; and detecting, by a sensing unit, whether the feed passes through the ejection subchannel; wherein, in response to the sensing unit not detecting the feed passing through the ejection subchannel, the processing unit controls the valve unit to enter a vibration state to vibrate the storage subchannel and the ejection subchannel

Further features of the present disclosure will become apparent from the following description of exemplary embodiments with reference to the attached drawings.

### BRIEF DESCRIPTION OF THE DRAWINGS

FIG. 1 illustrates a schematic diagram of a smart pet interaction device and a user device, according to one embodiment of the present disclosure.
FIG. 2 illustrates a cross-sectional structural diagram of the smart pet interaction device taken along section line A-A' in FIG. 1, according to one embodiment of the present disclosure.
FIG. 3a illustrates a schematic diagram of a structure of a transport channel, according to one embodiment of the present disclosure.
FIG. 3b illustrates a schematic diagram of a structure of a transport channel, according to another embodiment of the present disclosure.
FIG. 4 illustrates a schematic diagram of a standby state, according to one embodiment of the present disclosure.
FIGs. 5a and 5b illustrate schematic diagrams of an ejection state, according to one embodiment of the present disclosure.
FIG. 6 illustrates a schematic diagram of a vibration state, according to one embodiment of the present disclosure.
FIG. 7 illustrates a schematic diagram of a smart pet interaction device, according to another embodiment of the present disclosure.
FIG. 8 illustrates a flowchart of a smart pet interaction method, according to one embodiment of the present disclosure.

### DESCRIPTION OF THE EMBODIMENTS

Although the embodiments disclosed herein are susceptible to various modifications and alternative forms, specific embodiments are shown by way of example in the drawings and are described in detail herein. It should be understood, however, that drawings and detailed description are not intended to limit the scope of the claims to the particular forms disclosed. Rather, the disclosure is intended to cover all modifications, equivalents and alternatives falling within the spirit and scope of the disclosure of the present application as defined by the appended claims.

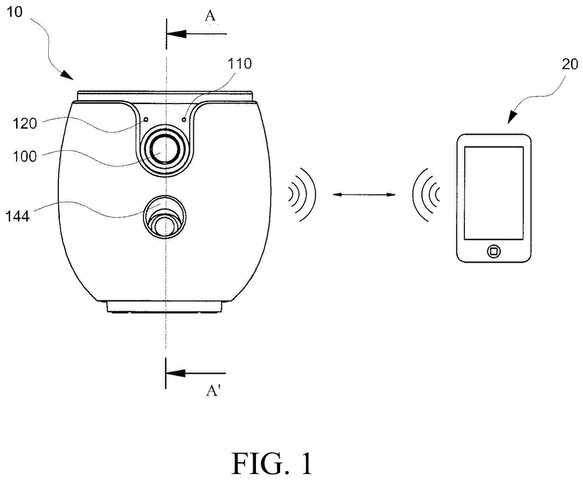

FIG. 1 illustrates a schematic diagram of a smart pet interaction device and a user device according to one embodiment of the present disclosure. The smart pet interaction device 10 may comprise a camera unit 100, an audio unit 110, an indicator unit 120, and a remote control function. The user device 20 may be a smartphone, a personal computer, a laptop, a tablet, or any computing device located remotely. The user device 20 is able to communicate wirelessly with the smart pet interaction device 10. Wireless communication may include, but is not limited to, third Generation Mobile Communication Technology (3G), Long-Term Evolution (LTE), fifth Generation Mobile Communication Technology (5G), Wireless Broadband (Wibro), Worldwide Interoperability for Microwave Access (WiMAX), Wireless Fidelity (Wi-Fi), Bluetooth (BT), Bluetooth Low Energy (BLE), Ultra Wide Band (UWB), Near Field Communication (NFC), Radio Frequency Identification (RFID), and Magnetic Secure Transmission (MST).

When the user is separated from their pet, the user may maintain interaction with their pet by viewing the pet's status in real time through the camera unit 100, sending and/or receiving audio via the audio unit 110, and ejecting pet food or pet toys through the remote control function. Taking pet food as an example, the smart pet interaction device 10 of the present disclosure is equipped with a sensor configured to detect whether the pet food has been successfully ejected. If the pet food is not ejected as expected, the channel will be vibrated to facilitate smooth ejection, thereby resolving the food blockage issues, enhancing user experience and improving the device's usability. In addition, the smart pet interaction device 10 of the present disclosure utilizes a valve unit as a switch for releasing pet food and propelling it forward. If the pet food is not ejected as expected, the channel through which the feed passes is vibrated accordingly. Thus, the invention effectively achieves the objectives of effectively reducing the number of components employed, lowering manufacturing costs, and minimizing the overall device size.

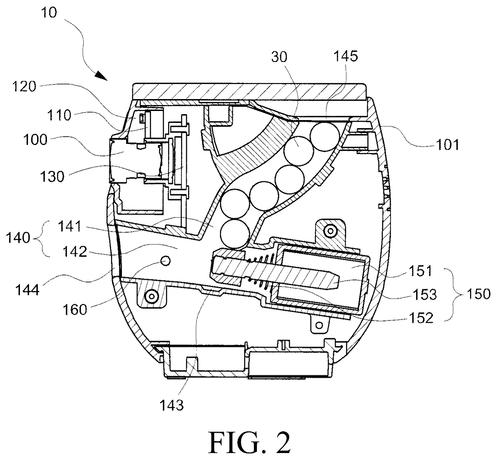

FIG. 2 illustrates a cross-sectional structural diagram of the smart pet interaction device taken along the section line A-A' in FIG. 1, according to one embodiment of the present disclosure. The smart pet interaction device 10 may comprise a housing 101, a camera unit 100, an audio unit 110, an indicator unit 120, a processing unit 130, a transport channel 140, a valve unit 150, and a sensing unit 160. The camera unit 100, the audio unit 110, the indicator unit 120, the processing unit 130, the transport channel 140, the valve unit 150, and the sensing unit 160 are disposed within the housing 101.

The camera unit 100 may include a camera configured to capture pet image data within a designated range. The audio unit 110 may include a microphone, a speaker, or other audio input/output devices configured to obtain pet audio data within a designated range. The indicator unit 120 may include one or more light-emitting devices to indicate the operational status of the device.

The processing unit 130 is electrically connected to the camera unit 100, the audio unit 110, the indicator unit 120, the valve unit 150, the sensing unit 160, and other components, and is configured to receive, generate, and transmit signals. In the present embodiment, the processing unit 130 may receive ejection signals. For example, the processing unit 130 may receive an ejection signal transmitted from the user device 20 operated by the user. In another embodiment, the processing unit 130 may generate ejection signals. For example, the smart pet interaction device 10 may obtain pet image data from the camera unit 100 and/or obtain pet audio data from the audio unit 110. If it is determined that the pet image data or the pet audio data meets the ejection conditions, an ejection signal will be automatically generated. In other words, the ejection signal is generated by determining the pet image data and/or the pet audio data. Ejection conditions for ejecting feed may include, but are not limited to, the pet correctly completing a specific action or making a particular bark. The processing unit 130 may include, but is not limited to, a Central Processing Unit (CPU), Microprocessor, Microcontroller Unit (MCU), or the like.

The transport channel 140 comprises a storage subchannel 141 and an ejection subchannel 142, wherein the storage subchannel 141 is connected to the ejection subchannel 142. In one embodiment, the storage subchannel 141 and the ejection subchannel 142 are integrated as a single channel. In another embodiment, the storage subchannel 141 and the ejection subchannel 142 are separate subchannels. The storage subchannel 141 may include a channel inlet 145 disposed at one end, through which the user may insert the feed 30. The storage subchannel 141 is configured to store feed 30. In the present embodiment, the storage subchannel 141 has a tubular shape, which serves to control the total amount of feed 30 stored and to prevent blockages caused by excessive weight. In another embodiment, the storage subchannel 141 may have a funnel shape to provide increased storage capacity.

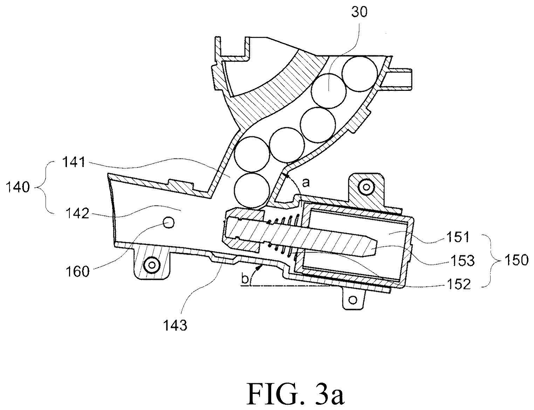

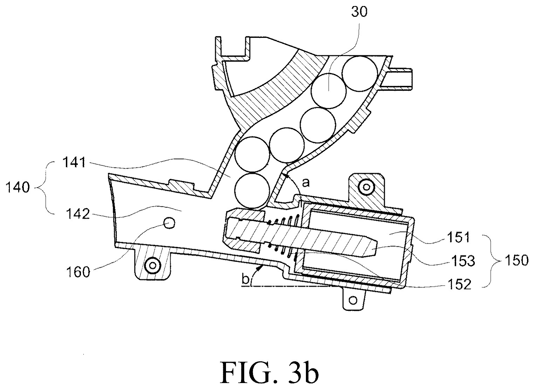

A channel outlet 144 is provided at one end of the ejection subchannel 142 distal to the junction connecting the storage subchannel 141 and the ejection subchannel 142, serving as an exit through which the feed 30 is discharged from the smart pet interaction device 10. Referring to FIG. 3a, a schematic diagram of the structure of a transport channel is illustrated, according to one embodiment of the present disclosure. The storage subchannel 141 is disposed substantially along a vertical direction, such that when the storage subchannel 141 is in communication with the ejection subchannel 142, the feed 30 enters the ejection subchannel 142 from the storage subchannel 141 under the influence of gravity. The ejection subchannel 142 is provided with a recess 143, the feed 30 may rest in the recess 143 when moving from the storage subchannel 141 to the ejection subchannel 142. The ejection subchannel 142 is substantially disposed in a horizontal direction, forming a first angle a between the storage subchannel 141 and the ejection subchannel 142 , where the first angle a ranges from 0 to 90 degrees (measured, for example, in a clockwise direction). The first angle may vary depending on practical application requirements, and the present disclosure is not limited thereto. In one embodiment, the ejection subchannel 142 forms a second angle b as an elevation angle with respect to the horizontal plane, such that a height of the channel outlet 144 relative to a bottom surface of the housing 101 of the smart pet interaction device 10 is greater than the height of the junction connecting the storage subchannel 141 and the ejection subchannel 142 relative to the bottom surface of the housing 101, allowing the feed 30 to follow a parabolic trajectory as it exits the smart pet interaction device 10. The second angle b may vary depending on practical application requirements, and the present disclosure is not limited thereto. In another embodiment, as shown in FIG. 3b, the ejection subchannel 142 may not include the recess 143. As the feed 30 moves along the storage subchannel 141 and enters the ejection subchannel 142, the ejection subchannel 142 is inclined at the second angle b with respect to the horizontal plane. In other words, the height of the channel outlet 144 relative to the bottom surface of the housing 101 of the smart pet interaction device 10 is greater than the height of the junction connecting the storage subchannel 141 and the ejection subchannel 142, thereby allowing the feed 30 to remain positioned at the junction connecting the storage subchannel 141 and the ejection subchannel 142.

Referring back to FIG. 2, the valve unit 150 is disposed within the ejection subchannel 142. More specifically, the valve unit 150 is disposed at the end of the ejection subchannel 142 opposite the channel outlet 144, and is disposed adjacent to the junction connecting the storage subchannel 141 and the ejection subchannel 142. The valve unit 150 is configured to control whether the storage subchannel 141 is in communication with the ejection subchannel 142. The valve unit 150 comprises a valve body 151, an elastic member 152, and a valve stem 153. The valve stem 153 is axially shaped, with the elastic member 152 sheathed over it. One end of the valve stem 153 is movably connected to the valve body 151 and is actuated by the valve body 151 to move linearly. The elastic member 152 is disposed between a protruding portion of the valve stem 153 and the end of the valve body 151 where the valve stem 153 is movably connected. The valve body 151 includes, but is not limited to, a solenoid valve, a piezo valve, an electro-valve, an actuating valve, and a pneumatic valve.

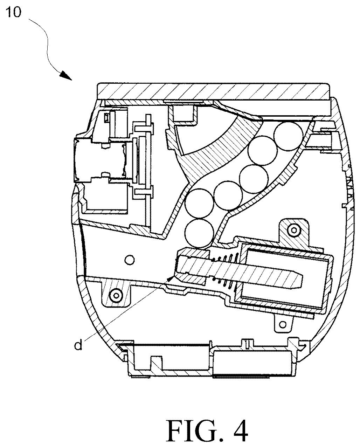

Referring to FIG. 4, a schematic diagram illustrating the standby state is shown, according to an embodiment of the present disclosure. In response to processing unit 130 not receiving the ejection signal, valve unit 150 is controlled to remain in the standby state. In the standby state, the valve body 151 is not actuated, and the valve stem 153 remains in the extended position d, thereby preventing the feed 30 from entering the ejection subchannel 142 from the storage subchannel 141 and retaining the feed 30 within the storage subchannel 141.

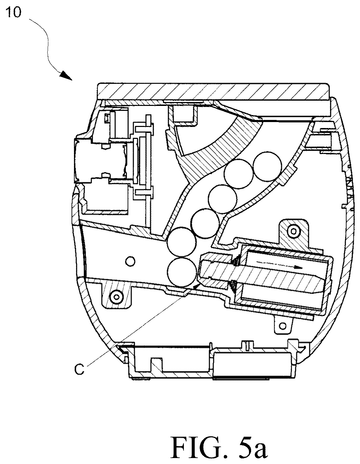

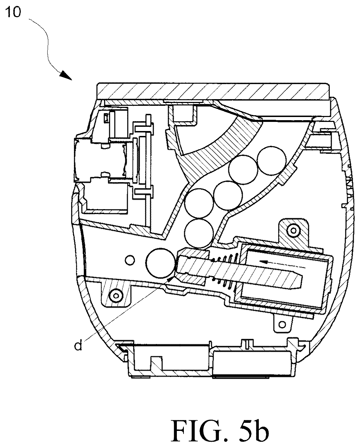

FIGs. 5a and 5b illustrate schematic diagrams of the ejection state, according to an embodiment of the present disclosure. Referring to FIG. 5a, in response to the ejection signal received by the processing unit 130, the processing unit 130 controls the valve unit 150 to enter the ejection state. In the ejection state, the valve body 151 actuates the valve stem 153, compressing the elastic member 152 and causing the valve stem 153 to move to the retracted position c. When the valve stem 153 is in the retracted position c, the storage subchannel 141 is in communication with the ejection subchannel 142, allowing the feed 30 to enter the ejection subchannel 142 from the storage subchannel 141. The ejection subchannel 142 is provided with a recess 143 configured to hold the feed 30 when the feed 30 enters the ejection subchannel 142 from the storage subchannel 141.

Referring to FIG. 5b, the elastic member 152 possesses elasticity such that elastic potential energy is stored when the valve stem 153 is moved to the retracted position c. When the valve stem 153 is driven to the retracted position c, the elastic member 152 releases the stored elastic potential energy, driving the valve stem 153 to return to the extended position d, thereby propelling the feed 30, held at the recess 143 of the ejection subchannel 142, toward the channel outlet 144. The feed 30 moves forward along the ejection subchannel 142 and exits the smart pet interaction device 10 through the channel outlet 144. In other words, in response to receiving the ejection signal, the processing unit 130 controls the valve unit 150 to enter the ejection state. The valve stem 153 of the valve unit 150 first moves to the retracted position c, thereby causing the storage subchannel 141 to be in communication with the ejection subchannel 142 and allowing the feed 30 to enter the ejection subchannel 142 from the storage subchannel 141. Subsequently, the valve stem 153 of the valve unit 150 returns to the extended position d, propelling the feed 30 forward and achieving release and propulsion of the feed 30. That is to say, upon receiving the ejection signal, the valve unit 150 first enters the ejection state and then returns to the standby state.

In one embodiment, the elastic member 152 may be an integrally formed elastic member, such as a spring sheet, a spring, or the like, configured to push the valve stem 153 back to the extended position d (i.e., returning the valve unit 150 to the standby state), thereby propelling the feed 30 forward along the ejection subchannel 142.

Referring back to FIG. 2, the sensing unit 160, disposed within the ejection subchannel 142, is configured to detect whether the feed 30 passes through the ejection subchannel 142. In one embodiment, the sensing unit 160 may be disposed in a central section of the ejection subchannel 142 to accurately detect whether the feed 30 moves forward along the ejection subchannel 142 and exits through the channel outlet 144. In another embodiment, the sensing unit 160 may be disposed adjacent to the junction connecting the storage subchannel 141 and the ejection subchannel 142 to more promptly detect whether the feed 30 enters the ejection subchannel 142.

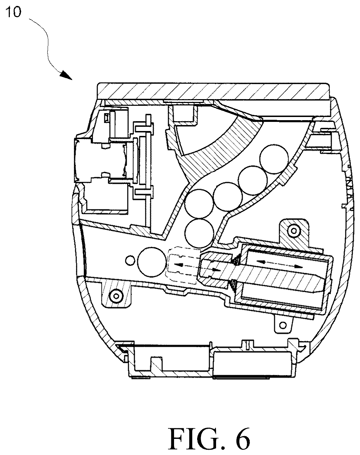

In response to the sensing unit 160 not detecting the feed 30 passing through the ejection subchannel 142, the processing unit 130 controls the valve unit 150 to enter the vibration state. Referring to FIG. 6, a schematic diagram of the vibration state is illustrated, according to one embodiment of present disclosure. In the vibration state, the valve body 151 actuates the valve stem 153 to perform multiple rapid linear reciprocating movements between the retracted position c and the extended position d, thereby generating vibrations in the storage subchannel 141 and the ejection subchannel 142 . These vibrations effectively loosen the feed 30 blockages caused by stacking and clear the feed 30 blockages within either the storage subchannel 141 or the ejection subchannel 142. Additionally, in response to the processing unit 130 receiving the ejection signal and the sensing unit 160 not detecting the feed 30 passing through the ejection subchannel 142 within a detection time threshold, the processing unit 130 controls the valve unit 150 to enter the vibration state, wherein the detection time threshold may be a predetermined time period elapsed after the ejection signal is received. In addition, in response to the processing unit 130 receiving the ejection signal and the sensing unit 160 not detecting the feed 30 passing through the ejection subchannel 142 within the detection time threshold, the processing unit 130 controls the valve unit 150 to remain in the vibration state until either a vibration duration threshold or a vibration count threshold is met. In response to the valve unit 150 being in the vibration state and the vibration of the valve stem 153 satisfying either the vibration duration threshold or the vibration count threshold, the sensing unit 160 redetects whether the feed 30 has passed through the ejection subchannel 142. If the passage of the feed 30 through the ejection subchannel 142 is still not detected by the sensing unit 160, the smart pet interaction device 10 may transmit a notification or generate an alert via the indicator unit 120, informing the user of a potential blockage of the feed 30 and prompting manual intervention.

The sensing unit 160 may include, but is not limited to, a piezoelectric sensor, a capacitive sensor, an inductive sensor, an interferometric sensor, an ultrasonic sensor, a microwave sensor, a radar sensor, an interferometer, a photo interrupter sensor, or other suitable types of sensors.

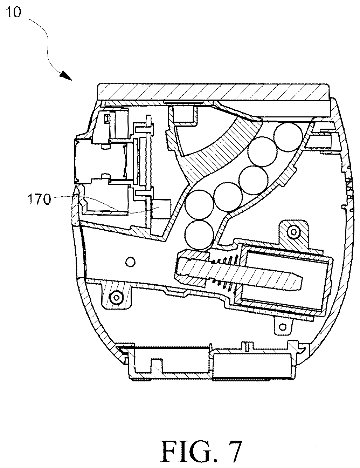

Referring to FIG. 7, a schematic diagram of a smart pet interaction device is illustrated, according to another embodiment of the present disclosure. Alternatively, the smart pet interaction device 10 may further comprise a vibration unit 170 disposed within the housing 101. The vibration unit 170 is electrically connected to the processing unit 130, and in response to the sensing unit 160 not detecting the feed 30 passing through the ejection subchannel 142, the processing unit 130 controls the vibration unit 170 to vibrate the storage subchannel 141 and/or the ejection subchannel 142, thereby clearing blockages of the feed 30 within the storage subchannel 141 and/or the ejection subchannel 142. The vibration unit 170 may be disposed either inside or outside the transport channel 140. More specifically, the vibration unit 170 may be disposed either inside or outside the storage subchannel 141 and/or the ejection subchannel 142. The vibration unit 170 may include, but is not limited to, a piezoelectric vibrator, an electromagnetic vibrator, a vibration motor, an ultrasonic oscillator, and the like. The type of vibration unit may vary depending on specific vibration frequency or power requirements, and the present disclosure is not limited thereto.

Alternatively, the smart pet interaction device 10 may further include a soundproofing unit and/or a vibration-damping unit configured to attenuate noises and vibrations generated by the valve unit 150 and/or the vibration unit 170 , thereby mitigating their impact on other components.

It should be understood that the components shown in the embodiment of FIG. 2 are for illustrative purposes only and are not intended to limit the scope of the present application. For example, the smart pet interaction device 10 of the present application may further include additional components, such as a power supply, a network communication device, a storage device, and the like. The power supply may be a portable or replaceable rechargeable battery configured to provide electrical power to other components of the smart pet interaction device. The network communication device may be configured to provide network connectivity to support network communication functions of the smart pet interaction device. The storage device may be a non-transitory machine-readable storage medium, including memory devices (e.g., flash memory, non-volatile random access memory (NVRAM)), magnetic storage devices (e.g., hard disks, magnetic disks), or any combination thereof, and may be used to store image data, audio data, and the like.

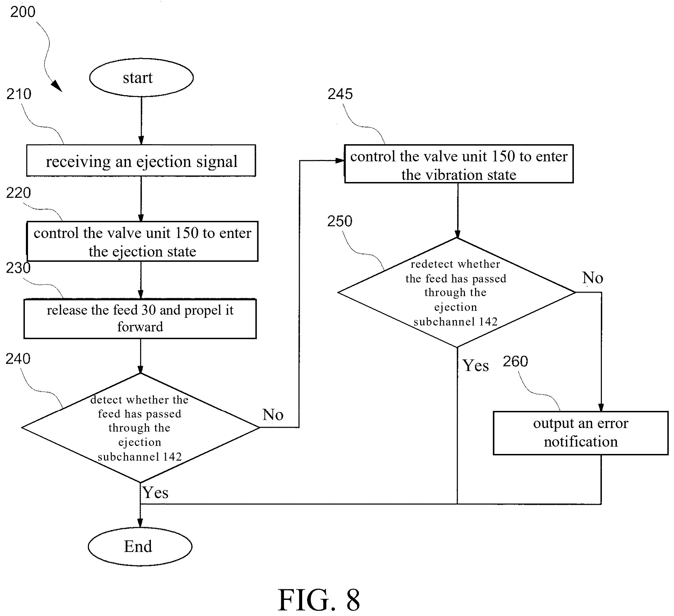

Referring to FIG. 8, a flowchart of a smart pet interaction method 200 is illustrated to exemplify an embodiment of the smart pet interaction method 200 performed using the smart pet interaction device 10, according to one embodiment of the present disclosure. The smart pet interaction method 200 includes, in step 210, receiving an ejection signal. The ejection signal may be transmitted from the user device 20 operated by the user, or may be generated based on a determination that the image data and/or audio data of the pet meet the ejection conditions.

In step 220, the processing unit 130 controls the valve unit 150 to enter the ejection state.

In step 230, when the valve unit 150 is in the ejection state, the storage subchannel 141 is brought into communication with the ejection subchannel 142 to release the feed 30 into the ejection subchannel 142 and propel the feed 30 forward. When the valve unit 150 is controlled to enter the ejection state, the valve unit 150 is first driven to the retracted position c, thereby enabling communication between the storage subchannel 141 and the ejection subchannel 142, releasing the feed 30 into the ejection subchannel 142. Next, the valve unit 150 returns to the extended position d to propel the feed 30 forward.

In step 240, the sensing unit 160 detects whether the feed 30 has passed through the ejection subchannel 142. If the sensing unit 160 does not detect the feed 30 passing through the ejection subchannel 142 within a predetermined detection time threshold, it indicates that the feed 30 has either not entered the ejection subchannel 142 from the storage subchannel 141, or has been blocked within the ejection subchannel 142 and has not moved forward. In response to the sensing unit 160 not detecting the feed 30 passing through the ejection subchannel 142, the method proceeds to step 245. In response to the sensing unit 160 detecting that the feed 30 has passed through the ejection subchannel 142, the method 200 ends.

In step 245, the processing unit 130 controls the valve unit 150 to enter the vibration state. In the vibration state, the valve stem 153 is actuated to perform multiple rapid linear reciprocating movements between the retracted position c and the extended position d, thereby inducing vibrations in the storage subchannel 141 and/or the ejection subchannel 142 to clear blockages of the feed 30 in the storage subchannel 141 and/or the ejection subchannel 142. After the valve unit 150 has remained in the vibration state for a predetermined period of time, i.e., when the vibration of the valve stem 153 meets the vibration duration threshold or the vibration count threshold, the method proceeds to step 250.

In step 250, the sensing unit 160 redetects whether the feed 30 passes through the ejection subchannel 142. Step 250 differs from step 240 in that if the valve stem 153 has met the vibration duration threshold or the vibration count threshold and the sensing unit 160 still does not detected the feed 30 passing through the ejection subchannel 142, the processing unit 130 ceases to control the valve unit 150 to remain in the vibration state, and the method proceeds to step 260. If the sensing unit 160 detects that the feed 30 passes through the ejection subchannel 142, indicating that after vibration, the feed 30 has smoothly passed through the ejection subchannel 142, the method 200 ends.

In step 260, the smart pet interaction device 10 may transmit a message or output an error notification via the indicator unit 120, informing the user of a potential blockage of the feed 30 and prompting manual intervention.

In view of the above, the smart pet interaction device of the present disclosure utilizes sensors to determine whether the feed has smoothly exited the ejection subchannel. If it is determined that the feed has not passed through the ejection subchannel, the device initiates vibrations to clear feed blockages within the channel, thereby enhancing user experience and improving device usability. Moreover, the smart pet interaction device of the present disclosure employs the valve unit to perform multiple functions, including feed release, feed propulsion, and channel vibration, thus effectively reducing the number of components employed, lowering manufacturing costs, and minimizing the overall device size.

Although terms including ordinal numbers, such as "first" and "second," are used herein to describe various elements, the structures of those elements are not restricted by such terms. Such terms are used only to distinguish one element from another. For example, without departing from the scope of the present disclosure, a first structural element may be referred to as a second structural element. Similarly, a second structural element may be referred to as a first structural element. As used herein, the term "and/or" is intended to include any and all combinations of one or more associated items.

The terms "portion," "device," "module" and "unit," as used herein refer to entities that perform at least one function or operation, which may be implemented in hardware, software, or a combination of hardware and software.

The terms used herein are solely intended to describe various embodiments of the present disclosure and are not intended to limit the scope thereof. Unless expressly specified otherwise in the context, singular forms are intended to include plural forms. In the present disclosure, it should be understood that the terms "include" or "have" as used herein indicate the existence of specified features, numbers, steps, operations, structural elements, parts, or combinations thereof, and do not exclude the existence of, or the possibility of adding, one or more other features, numbers, steps, operations, structural elements, parts, or combinations thereof.

Unless otherwise specified, all terms used herein shall have the same meanings as understood by a person skilled in the art to which the present disclosure pertains. Unless expressly specified in the present disclosure, terms such as those defined in commonly used dictionaries shall be interpreted to have the same meanings as their contextual meanings in the relevant field of art, and shall not be interpreted to have idealized or overly formal meanings.

Various embodiments may include one or more components. A component may include any structure configured to perform specific operations. Although an embodiment may be described by way of example as having a limited number of components arranged in a specific configuration, the embodiment may, in a given implementation, include more or fewer components arranged in alternative configurations as needed. It is noted that any reference to "one embodiment" or "an embodiment" means that the specific features, structures, or characteristics described in connection with that embodiment are included in at least one embodiment. The phrase "one embodiment" (or "an embodiment") as used throughout the present disclosure does not necessarily refer to the same embodiment.

Although the operations of the methods disclosed herein are presented and described in a specific order, the sequence of operations for each method may be modified such that some operations may be executed in reverse order, resulting in at least partially concurrent execution with other operations. In another embodiment, instructions or sub-operations of distinct operations may be performed in an intermittent and/or alternating manner.

While the invention has been described with reference to the specific embodiments above, many modifications and variations may be apparent to those of ordinary skill in the art without departing from the scope and spirit of the present disclosure. Therefore, it is intended that the invention be limited only by the appended claims.

## Claims

1. A smart pet interaction device (10), comprising:
a housing (101);
a transport channel (140) disposed within the housing (101), the transport channel (140) including a storage subchannel (141) and an ejection subchannel (142) connected to each other, the storage subchannel (141) configured to store feed (30), and the ejection subchannel (142) provided with a channel outlet (144), through which the feed (30) exits the smart pet interaction device (10);
a valve unit (150), disposed at a junction connecting the storage subchannel (141) and the ejection subchannel (142), configured to control whether the storage subchannel (141) and the ejection subchannel (142) are in communication;
a sensing unit (160), disposed within the ejection subchannel (142), configured to detect whether the feed (30) passes through the ejection subchannel (142); and
a processing unit (130), disposed within the housing (101) and electrically connected to the valve unit (150) and the sensing unit (160);
wherein, in response to an ejection signal received by the processing unit (130), the processing unit (130) controls the valve unit (150) to enter an ejection state, causing the storage subchannel (141) to communicate with the ejection subchannel (142), and the valve unit (150) propels the feed (30) toward the channel outlet (144) along the ejection subchannel (142).

2. The smart pet interaction device (10) of claim 1, wherein
the ejection subchannel (142) is provided with a recess (143) configured to hold the feed (30) in the recess (143) upon entering the ejection subchannel (142).

3. The smart pet interaction device (10) of claim 1 or claim 2, wherein
in response to the sensing unit (160) not detecting the feed (30) passing through the ejection subchannel (142), the processing unit (130) is configured to control the valve unit (150) to enter a vibration state to vibrate the transport channel (140).

4. The smart pet interaction device (10) of any of the preceding claims, wherein
in response to the processing unit (130) not receiving the ejection signal (142), the processing unit (130) is configured to control the valve unit (150) to enter a standby state.

5. The smart pet interaction device (10) of any of the preceding claims, wherein
a height of the channel outlet (144) relative to a bottom surface of the housing (101) is greater than a height of the junction connecting the storage subchannel (141) and the ejection subchannel (142) relative to the bottom surface of the housing (101).

6. The smart pet interaction device (10) of any of the preceding claims, wherein
the valve unit (150) includes a movable valve stem (153), when the valve unit (150) is in the ejection state, the valve stem (153) is configured to first move to a retracted position to enable communication between the storage subchannel (141) and the ejection subchannel (142), and then move to an extended position to propel the feed (30) in the ejection subchannel (142) toward the channel outlet (144).

7. The smart pet interaction device (10) of claim 3, wherein
the valve unit (150) includes a movable valve stem (153), when the valve unit (150) is in the vibration state, the valve stem (153) is configured to perform multiple linear reciprocating movements between a retracted position and an extended position.

8. The smart pet interaction device (10) of claim 4, wherein
the valve unit (150) includes a movable valve stem (153), when the valve unit (150) is in the standby state, the valve stem (153) is configured to move to an extended position to disable communication between the storage subchannel (141) and the ejection subchannel (142).

9. The smart pet interaction device (10) of any of the preceding claims, further comprising:
an audio unit (110), configured to obtain audio data;
wherein the processing unit (130) is electrically connected to the audio unit (110), and is configured to generate the ejection signal when it is determined by the processing unit (130) that the audio data meets an ejection condition.

10. A smart pet interaction method (200), comprising:
receiving an ejection signal by a processing unit (130);
controlling a valve unit (150) to enter an ejection state to enable communication between a storage subchannel (141) and an ejection subchannel (142), and propelling feed (30) forward; and
detecting, by a sensing unit (160), whether the feed (30) passes through the ejection subchannel (142);
wherein, in response to the sensing unit (160) not detecting the feed (30) passing through the ejection subchannel (142), the processing unit (130) is configured to control the valve unit (150) to enter a vibration state to vibrate the storage subchannel (141) and the ejection subchannel (142).

11. The smart pet interaction method (200) according to claim 10 using a smart pet interaction device (10) according to any of claims 1 to 9.

12. Use of a smart pet interaction device (10) according to any of claims 1 to 9 in a smart pet interaction method (200) according to claim 10.

## Amended claims

### Amended claims in accordance with Rule 137(2) EPC.

1. A pet interaction device (10), comprising:
a housing (101);
a transport channel (140) disposed within the housing (101), the transport channel (140) including a storage subchannel (141) and an ejection subchannel (142) connected to each other, the storage subchannel (141) configured to store feed (30), and the ejection subchannel (142) provided with a channel outlet (144), through which the feed (30) exits the pet interaction device (10);
a valve unit (150), disposed at a junction connecting the storage subchannel (141) and the ejection subchannel (142), configured to control whether the storage subchannel (141) and the ejection subchannel (142) are in communication;
a sensing unit (160), disposed within the ejection subchannel (142), configured to detect whether the feed (30) passes through the ejection subchannel (142); and
a processing unit (130), disposed within the housing (101) and electrically connected to the valve unit (150) and the sensing unit (160);
wherein the processing unit (130) is adapted to, in response to an ejection signal received by the processing unit (130), control the valve unit (150) to enter an ejection state, cause the storage subchannel (141) to communicate with the ejection subchannel (142), and the valve unit (150) to propel the feed (30) toward the channel outlet (144) along the ejection subchannel (142); and
the processing unit (130) is adapted to, in response to the sensing unit (160) not detecting the feed (30) passing through the ejection subchannel (142), control the valve unit (150) to enter a vibration state to vibrate the transport channel (140).

2. The pet interaction device (10) of claim 1, wherein
the ejection subchannel (142) is provided with a recess (143) configured to hold the feed (30) in the recess (143) upon entering the ejection subchannel (142).

3. The pet interaction device (10) of any of the preceding claims, wherein
the processing unit (130) is adapted to, in response to the processing unit (130) not receiving the ejection signal, control the valve unit (150) to enter a standby state.

4. The pet interaction device (10) of any of the preceding claims, wherein
a height of the channel outlet (144) relative to a bottom surface of the housing (101) is greater than a height of the junction connecting the storage subchannel (141) and the ejection subchannel (142) relative to the bottom surface of the housing (101).

5. The pet interaction device (10) of any of the preceding claims, wherein
the valve unit (150) includes a movable valve stem (153), when the valve unit (150) is in the ejection state, the valve stem (153) is configured to first move to a retracted position to enable communication between the storage subchannel (141) and the ejection subchannel (142), and then move to an extended position to propel the feed (30) in the ejection subchannel (142) toward the channel outlet (144).

6. The pet interaction device (10) of claim 3, wherein
the valve unit (150) includes a movable valve stem (153), when the valve unit (150) is in the vibration state, the valve stem (153) is configured to perform multiple linear reciprocating movements between a retracted position and an extended position.

7. The pet interaction device (10) of claim 4, wherein
the valve unit (150) includes a movable valve stem (153), when the valve unit (150) is in the standby state, the valve stem (153) is configured to move to an extended position to disable communication between the storage subchannel (141) and the ejection subchannel (142).

8. The pet interaction device (10) of any of the preceding claims, further comprising:
an audio unit (110), configured to obtain audio data;
wherein the processing unit (130) is electrically connected to the audio unit (110), and is configured to generate the ejection signal when it is determined by the processing unit (130) that the audio data meets an ejection condition.

9. A pet interaction method (200) using a pet interaction device (10) according to any of claims 1 to 8, comprising:
receiving an ejection signal by a processing unit (130);
controlling a valve unit (150) to enter an ejection state to enable communication between a storage subchannel (141) and an ejection subchannel (142), and propelling feed (30) forward; and
detecting, by a sensing unit (160), whether the feed (30) passes through the ejection subchannel (142);
wherein, in response to the sensing unit (160) not detecting the feed (30) passing through the ejection subchannel (142), the processing unit (130) is configured to control the valve unit (150) to enter a vibration state to vibrate the storage subchannel (141) and the ejection subchannel (142).

10. Use of a pet interaction device (10) according to any of claims 1 to 8 in a pet interaction method (200) according to claim 9.
